# EUROPEAN PATENT APPLICATION

(11) **EP 4 822 427 A1**
(43) Date of publication of application: **14.10.2026**
(21) Application number: 24915214.1
(22) Date of filing: 28.12.2024
(51) Int. Cl.: G02C 5/20, G02C 5/16, G02C 5/22

(54) **GLASSES AND HINGE ASSEMBLY**

(30) Priority: 05.01.2024 CN 202410022234; 30.01.2024 CN 202410132462
(71) Applicant: Beijing Unicorn Technology Co., Ltd., Beijing 100098 (CN)
(72) Inventor: WANG, Jun, Beijing 100098 (CN); LIU, Yang, Beijing 100098 (CN)
(74) Representative: Grünecker Patent- und Rechtsanwälte PartG mbB
(86) International application number: PCT/CN2024/143508
(87) International publication number: WO 2025/146000

(57) **Abstract**

Embodiments of the present disclosure disclose glasses (100) and a hinge assembly (1). The glasses (100) include a frame (3) and temples (2), wherein the frame (3) is configured to support optical elements, and the temples (2) are connected to the frame (3). The temples (2) have a first position and a second position relative to the frame (3), and the temples (2) are movable between the first position and the second position relative to the frame (3). When each temple (2) leaves the first position, a first clamping force is applied to a clamping part of the temple (2). When the temple (2) reaches the second position, a second clamping force is applied to the clamping part. A ratio of the second clamping force to the first clamping force is greater than 1 and less than or equal to 1.3. The hinge assembly (1) includes a first component (11) and a second component (12) rotatably connected to each other, and an elastic component (13). The elastic component (13) is disposed between the first component (11) and the second component (12) to provide a first moment for retaining the second component (12) in the first position and a second moment for rotating the second component (12) from the second position toward the first position, wherein a ratio of the second moment to the first moment is greater than 1 and less than or equal to 1.3.

## Description

The present disclosure claims priority to Chinese Patent Application No. CN202410022234.X, filed with the China National Intellectual Property Administration on January 5, 2024, and entitled "Glasses and Hinge Assembly", and Chinese Patent Application No. CN202410132462.2, filed with the China National Intellectual Property Administration on January 30, 2024, and entitled "Glasses and Hinge Assembly", which are incorporated herein by reference in their entirety.

### TECHNICAL FIELD

The present disclosure relates to the field of wearable technologies, and in particular to glasses and a hinge assembly.

### BACKGROUND

A clamping force of a temple of glasses is usually provided by an elastic component. Due to a limited size of internal space of the glasses, the elastic component has a relatively small compression space. In order to finally obtain a large clamping force, an elastic component with a large elastic coefficient is required. Therefore, it leads to a large difference between an initial clamping force and a final clamping force during outward splaying of the temple. That is, users with small head circumferences feel an insufficient clamping force, while users with large head circumferences feel a very obvious clamping force.

### SUMMARY

Embodiments of the present disclosure provide a hinge assembly configured to hingedly connect a frame to a temple of glasses. The hinge assembly includes a temple, a frame and an elastic component. A first component is connected to the frame, or the first component is a part of the frame. The frame is connected to the temple, or the frame is a part of the temple. The temple is rotationally connected to the frame, and the frame has a first position and a second position relative to the temple. A second component is capable of rotating between the first position and the second position relative to the first component. The elastic component is disposed between the temple and the frame to provide a first moment for retaining the frame in the first position and a second moment for rotating the second component from the second position toward the first position, wherein a ratio of the second moment to the first moment is greater than 1 and less than or equal to 1.3.

Embodiments of the present disclosure further provide glasses, including: a frame configured to support optical elements; temples connected to the frame; and hinge assemblies as described above, wherein each hinge assembly is configured to hingely connect the frame to a corresponding temple of the glasses, enabling the temple to rotate between the first position and the second position relative to the frame.

Embodiments of the present disclosure further provide glasses, including: a frame configured to support optical elements; and temples connected to the frame, wherein the temples are movable between the first position and the second position relative to the frame; when each temple leaves the first position, a first clamping force is applied to a clamping part of the temple; when the temple reaches the second position, a second clamping force is applied to the clamping part; and a ratio of the second clamping force to the first clamping force is greater than 1 and less than or equal to 1.3.

The technical solution of the present disclosure is further described in detail below in conjunction with the accompanying drawings and embodiments.

### BRIEF DESCRIPTION OF THE DRAWINGS

The drawings constituting a part of the specification describe embodiments of the present disclosure, and together with the description, serve to explain the principle of the present disclosure.

With reference to the accompanying drawings, the present disclosure can be understood more clearly according to the following detailed description, in which:
Fig. 1 shows a schematic structural view of glasses according to embodiments of the present disclosure;
Fig. 2 shows a schematic view of glasses according to embodiments of the present disclosure with temples in a first position;
Fig. 3 shows schematic view of glasses according to embodiments of the present disclosure with temples in a second position;
Fig. 4 shows a partial structural exploded view of glasses with a first type of hinge assembly according to embodiments of the present disclosure;
Fig. 5 shows a schematic structural view of a first type of hinge assembly according to embodiments of the present disclosure;
Fig. 6 shows a partial structural exploded view of glasses with a first type of hinge assembly according to embodiments of the present disclosure;
Fig. 7 shows a schematic diagram of forces acting on a first type of hinge assembly according to embodiments of the present disclosure;
Fig. 8 shows a schematic structural view of a second type of hinge assembly according to embodiments of the present disclosure;
Fig. 9 shows a schematic diagram of forces acting on a second type of hinge assembly according to embodiments of the present disclosure;
Fig. 10 shows a schematic partial structural view of glasses with a third type of hinge assembly according to embodiments of the present disclosure;
Fig. 11 shows a partial cross-sectional view of glasses with a third type of hinge assembly according to embodiments of the present disclosure;
Fig. 12 shows a schematic structural view of a third type of hinge assembly according to embodiments of the present disclosure;
Fig. 13 shows a schematic diagram of forces acting on a third type of hinge assembly according to embodiments of the present disclosure; and
Fig. 14 shows a curve graph illustrating a relationship between a temple clamping force and an outward splaying angle in a first-type of hinge assembly according to embodiments of the present disclosure and in an ordinary hinge assembly.

Listing of reference signs: 100. Glasses; 1. Hinge assembly; 11. First component; 111. First extension portion; 113. First rotational connecting portion; 1131. Connecting post; 1131a. Post hole; 1132. Connecting shaft; 114. Second extension portion; 12. Second component; 121. Limiting portion; 122. Connecting arm; 1221. First connecting hole; 123. Second connecting plate; 13. Elastic component; 14. First rod body; 141. Pivot hole; 15. Second rod body; 16. Sliding ring; 161. Limiting recess; 17. Spring; 18. Limiting screw; 2. Temple; 21. Temple shell; 22. Second connecting base; 23. Through hole; 24. Threaded hole; 3. Frame; 31. Front frame; 32. Crossbeam; 33. First connecting base; 34. Pivot screw; 35. Pivot seat screw; a. Screw.

It is to be noted that these drawings and text descriptions are not intended to limit the scope of conception of the present invention in any way, but to explain the concepts of the present invention for those skilled in the art by referring to specific embodiments.

### DETAILED DESCRIPTION

To make the objects, technical solutions and advantages of embodiments of the present invention clearer, the technical solutions in the embodiments will be described clearly and completely with reference to the drawings in the embodiments of the present invention. The following embodiments are used for illustrating the present invention, but not limiting the scope of the present invention.

In description of the present invention, it should be noted that orientation or location relations denoted by the terms "upper", "lower", "inner", "outer", etc. are orientation or location relations based on illustration in the drawings, are only intended to facilitate describing the present invention and simplify description, instead of indicating or implying the denoted apparatuses or elements must have specific orientations and are constructed and operated in specific orientations, and thus they should not be construed as limiting the present invention.

In description of the present invention, it should be noted that unless otherwise explicitly specified and defined, the terms "mount" and "connect" should be construed broadly. For example, such terms may denote fixed connection, or detachable connection, or integrated connection; may denote mechanical connection, or electrical connection; may denote direct connection, or connection via an intermediate medium. For those of ordinary skill in the art, specific meanings of the above-mentioned terms in the present invention may be construed according to specific conditions.

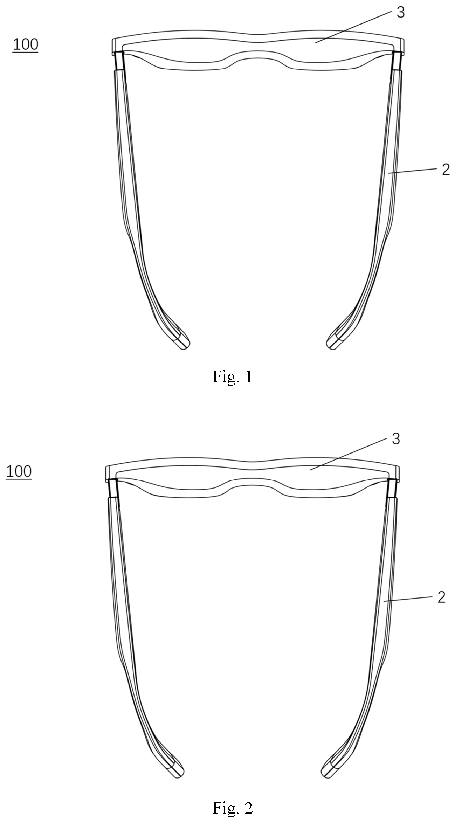

Fig. 1 shows glasses 100 according to some embodiments of the present disclosure. The glasses include a frame 3 and temples 2. The frame 3 is configured to support optical elements. The temples 2 are connected to the frame 3. The temples 2 are movable relative to the frame 3 so as to adjust an angle of each temple relative to the frame. When a user wears the glasses 100, each temple 2 applies a clamping force to the head of the user, so that the glasses 100 can be worn securely.

In some optional embodiments of the present disclosure, the clamping force exerted by the temple 2 may be provided by the temple 2 itself. For example, the temple 2 includes a portion made of a flexible material so that the temple 2 has deformability. When the temple 2 splays outward, the temple 2 undergoes elastic deformation to apply the clamping force to the user's head.

In some optional embodiments of the present disclosure, the clamping force exerted by the temple 2 may also be provided by an elastic component 13 disposed between the temple 2 and the frame 3. During splaying of the temple 2, the elastic component 13 deforms. A deformation restoring force generated by the elastic component 13 causes the temple 2 to generate the clamping force.

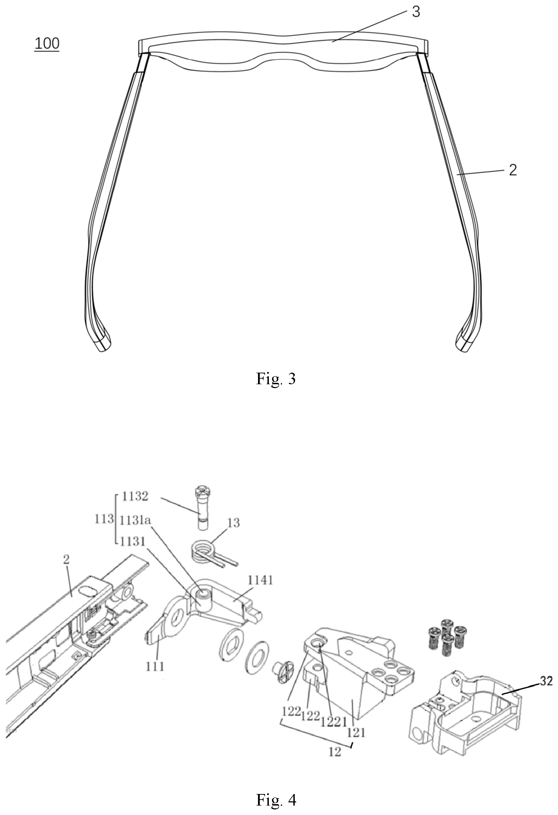

Fig. 2 shows a schematic view of glasses according to embodiments of the present disclosure with temples in a first position. Fig. 3 shows schematic view of glasses according to embodiments of the present disclosure with temples in a second position. In some embodiments of the present disclosure, the temples 2 have a first position and a second position relative to the frame 3, and the temples 2 are movable between the first position and the second position relative to the frame. When a temple 2 just leaves the first position, a first clamping force is applied to a clamping part of the temple 2. When the temple 2 reaches the second position, a second clamping force is applied to the clamping part. A ratio of the second clamping force to the first clamping force is greater than 1 and less than or equal to 1.3.

In some embodiments of the present disclosure, the first position may be a position where the temple 2 is in a naturally splayed state; and the second position may be a position where the temple 2 is at a maximum splaying angle relative to the frame 3.

In some embodiments of the present disclosure, the first position may be a position where the temple 2 provides a minimum clamping force, and the second position may be a position where the temple 2 provides a maximum clamping force.

When the first position is the position where the temple 2 is in the naturally splayed state, the clamping force exerted by the temple 2 is zero, that is, the temple 2 does not apply a clamping force. When the temple 2 leaves the first position, a user wearing the glasses 100 can immediately feel the clamping force exerted by the temple 2.

During outward splaying of the temple 2 of the glasses 100 according to embodiments of the present disclosure, the clamping force exerted on a user's head does not increase significantly. There is not much difference in the clamping force felt by users with small head circumferences and users with large head circumferences when they wear the glasses 100, such that users with different head circumferences can all have a good comfortable experience when wearing the glasses 100 according to the present disclosure.

In some embodiments of the present disclosure, when the temple 2 is in the first position, a first included angle is formed between the frame and the temple 2; and when the temple 2 is in the second position, a second included angle is formed between the frame and the temple 2. A difference between the first included angle and the second included angle is greater than or equal to 15 degrees and less than or equal to 25 degrees.

When the temple 2 moves from a splaying angle of 15 degrees to a splaying angle of 25 degrees, the clamping force exerted by the temple 2 on a user's head does not increase significantly, and the clamping force felt by the user does not change significantly either, such that users with different head circumferences all have a comfortable wearing experience. In embodiments of the present disclosure, when each temple 2 splays from 15 degrees to 25 degrees, a clamping space between the two temples 2 varies over a relatively large range, which can meet wearing requirements of most users, such that most users can have a good wearing experience.

In some embodiments of the present disclosure, the first clamping force is greater than or equal to 0.23 kgf and less than or equal to 0.27 kgf. Herein kgf represents kilogram-force.

Under normal circumstances, most of the weight of the glasses 100 is distributed on the frame 3. When a user wears the glasses 100, the bridge of the user's nose bears most of the weight of the glasses 100, and the two ears bear a small part of the weight of the glasses 100. Applying the first clamping force of greater than or equal to 0.23 kgf and less than or equal to 0.27kgf at the clamping part by the temple 2 can effectively reduce the compression of the bridge of the user's nose by the glasses 100, conforming to ergonomic design, while preventing the glasses 100 from sliding down or falling off, resulting in a good wearing experience for the user.

In some embodiments of the present disclosure, a distance between the clamping part and the connection between the temple 2 and the frame is 7.5cm to 8.5cm. The clamping part is a part of the temple 2 that comes into contact with a user's head, and clamping parts directly applies clamping force to both sides of the user's head. It has been proven in a large number of experiments that for most users, during wearing of the glasses 100, the part of the temple 2 in contact with a user's head is 7.5 cm to 8.5 cm away from the frame 3. This part is the clamping part. The clamping force exerted by the clamping part enables most users to enjoy a comfortable wearing experience.

Optionally, when the temple 2 is fixed to the frame 3 by means of a fastener, the clamping part is a part of the temple 2 that is 7.5 cm to 8.5 cm away from the connection with the frame; and when the temple 2 is hinged to the frame 3, the clamping part is a part of the temple 2 that is 7.5cm to 8.5cm away from a rotation center of the temple 2.

In some embodiments of the present disclosure, when the temple 2 is in the first position, the included angle between the temple 2 and the frame 3 is greater than or equal to 83 degrees and less than or equal to 87 degrees. The first position may be a position where the temple 2 is in a naturally splayed state or a position where the temple is nearly in a naturally splayed state. When the temple 2 is in the first position, the temple 2 does not apply a clamping force. When the temple 2 splays outward and leaves the first position, a user immediately feels the clamping force.

In some embodiments of the present disclosure, the weight of the glasses 100 is greater than or equal to 50 grams and less than or equal to 100 grams. By limiting the weight of the glasses 100 to between 50 grams and 100 grams, the compression of a user's head (such as the bridge of the nose and the ears) by the glasses can be reduced, and discomfort symptoms that may occur after wearing for a long time can be alleviated, thereby improving wearing comfort.

In some embodiments of the present disclosure, in the case where the weight of the glasses 100 is greater than or equal to 50 grams and less than or equal to 100 grams, applying the first clamping force of greater than or equal to 0.23 kgf and less than or equal to 0.27 kgf at the clamping part by the temple 2 can effectively reduce the compression of the bridge of a user's nose by the glasses 100 with the weight, conforming to ergonomic design, while preventing the glasses 100 from sliding down or falling off, resulting in a good wearing experience for the user.

Fig. 4 shows a partial structural exploded view of glasses with a first type of hinge assembly according to embodiments of the present disclosure. As shown in Fig. 4, the glasses 100 according to some embodiments of the present disclosure include: a frame 3, temples 2 and elastic components 13. The elastic components 13 are disposed between the frame 3 and the temples 2. The elastic components 13 resist rotation of the temples 2 from the first position to the second position.

The elastic components 13 are configured to provide a damping force for the outward splaying of the temples 2 relative to the frame 3. When the glasses 100 are worn on a user's head, the two temples 2 of the glasses 100 splay outward. The damping force provided by the elastic components 13 enables the two temples 2 to clamp the user's head, thereby enabling the temples 2 to relieve pressure on nose pads of the glasses 100 and enabling the glasses 100 to be securely worn on the user's head. During splaying of the temples 2 relative to the frame 3, the elastic deformation of the elastic components 13 increases, and the elastic components 13 apply a damping force to the temples 2, causing the temples 2 to apply to the user's head a clamping force in a direction opposite to the damping force. The elastic components 13 include, but are not limited to, torsion springs, elastic pieces, tension springs, compression springs and damping shafts.

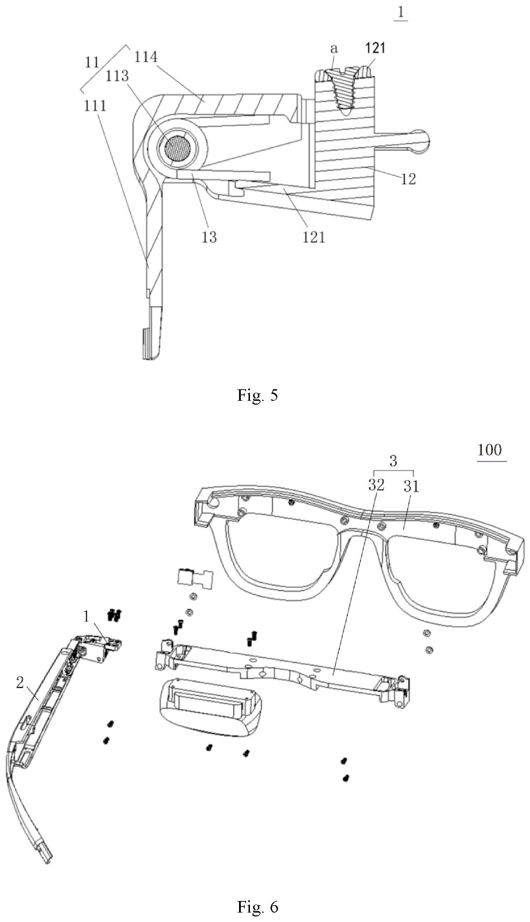

Fig. 5 shows a schematic structural view of a hinge assembly of glasses with a torsion spring according to some embodiments of the present disclosure. As shown in Fig. 5, in the case where the elastic component 13 of the glasses 100 is a torsion spring, in the first position, the torsion spring is limited between the temple 2 and the frame 3 at a preset torsion angle; and during splaying of the temple 2 to the second position, a torsion angle of the torsion spring increases, and the torsion spring provides a damping force to the temple 2 that resists rotation of the temple, such that the temple 2 applies a clamping force to the user's head in a direction opposite to the damping force.

In some embodiments of the present disclosure, the elastic component 13 of the glasses 100 may also be an elastic piece. Optionally, the elastic piece has two straight pieces. In a natural state, an included angle is formed between the two straight pieces. In the first position, the elastic piece is limited between the temple 2 and the frame 3 at a preset angle. During splaying of the temple 2, the included angle between the two straight pieces changes, thereby providing a damping force to the temple 2 that resists rotation of the temple, such that the temple 2 applies a clamping force to the user's head in a direction opposite to the damping force.

In some embodiments of the present disclosure, the elastic component 13 of the glasses 100 may be a tension spring. In the first position, the tension spring is limited between the temple 2 and the frame 3 at a preset extension length. During splaying of the temple 2 to the second position, an extension length of the tension spring continuously increases, thereby providing a damping force to the temple 2 that resists rotation of the temple, such that the temple 2 applies a clamping force to the user's head in a direction opposite to the damping force.

In some embodiments of the present disclosure, the elastic component 13 of the glasses 100 may be a compression spring. In the first position, the compression spring is limited between the temple 2 and the frame 3 at a preset compression length. During splaying of the temple 2 to the second position, a compression length of the tension spring continuously decreases, thereby providing a damping force to the temple 2 that resists rotation of the temple, such that the temple 2 applies a clamping force to the user's head in a direction opposite to the damping force.

In some embodiments of the present disclosure, the elastic component 13 of the glasses 100 may be a damping shaft. When the temple leaves the first position, the damping shaft immediately provides a damping force. During splaying of the temple 2 to the second position, the damping shaft can provide an increased damping force, thereby providing to the temple 2 a damping force that resists rotation of the temple, such that the temple 2 applies a clamping force to the user's head in a direction opposite to the damping force. Optionally, the damping shaft may also provide a constant damping force, or a varying damping force.

In some embodiments of the present disclosure, the glasses 100 further include hinge assemblies 1. The hinge assemblies 1 are disposed between the temples 2 and the frame. The temples 2 are rotationally connected to the frame through the hinge assemblies 1. The temples 2 and the frame 3 are connected to each other through the hinge assemblies 1. The hinge assemblies 1 enable relative rotation between the frame 3 and the temples 2 so as to adjust angles of the temples 2 relative to the frame 3. The elastic components 13 are disposed on the hinge assemblies 1.

A hinge assembly usable for the glasses according to embodiments of the present disclosure is provided below.

Fig. 5 shows a first type of hinge assembly 1 according to some embodiments of the present disclosure. As shown in Fig. 5, the hinge assembly 1 may include a first component 11 and a second component 12. The first component 11 and the second component 12 are rotatably connected and can rotate relative to each other within a certain angular range. The first component 11 may be configured to connect to the temple 2, and the second component 12 may be configured to connect to the frame 3, thereby achieving connection between the temple 2 and the frame 3. When the first component 11 and the second component 12 rotate relative to each other, the temple 2 rotates relative to the frame 3, enabling angular adjustment between the temple 2 and the frame 3.

As shown in Figs. 4 and 5, the first component 11 includes a first extension portion 111 and a second extension portion 114. The first extension portion 111 and the second extension portion 114 are connected to each other. Optionally, the first extension portion 111 and the second extension portion 114 may extend in different directions; that is, an included angle may be formed between the first extension portion 111 and the second extension portion 114. Alternatively, the first extension portion 111 and the second extension portion 114 may extend along a curve; for example, the first extension portion 111 and the second extension portion 114 extend along an arc. As shown in Fig. 2, the second component 12 includes oppositely arranged limiting portions 121. The oppositely arranged limiting portions 121 can accommodate the second extension portion 114, and can provide space for movement of the second extension portion 114. Optionally, two limiting portions 121 are provided, and the two limiting portions 121 are arranged spaced apart and opposite each other. The first component 11 is rotatably connected to the second component 12, such that the second extension portion 114 of the first component 11 is located between the oppositely arranged limiting portions 121, and the second extension portion 114 is rotatable about a first axial direction, to enable the temple 2 to rotate about the first axial direction relative to the frame 3. The limiting portions 121 of the second component 12 define limit positions of relative rotation of the second extension portion 114, i.e., define a relative rotation range of the second extension portion 114. Thus, a relative rotation range of the temple 2 and the frame 3 can be limited.

In some embodiments of the present disclosure, as shown in Fig. 5, an elastic component 13 is provided in the hinge assembly 1. An elastic force of the elastic component 13 may serve as a restoring force for the movement of the first component 11 relative to the second component 12, that is, as a damping force for the outward splaying of the temple 2 relative to the frame 3.

As shown in Fig. 5, the elastic component 13 is located between the first component 11 and the second component 12 to provide a restoring force for the first extension portion 111 to rotate toward the second component 12. Under the action of an external force, during a process in which the temple 2 splays relative to the frame 3, the elastic component 13 located between the first component 11 and the second component 12 is deformed under force. After the external force is removed, the elastic component 13 recovers from the deformation, causing the temple 2 to pivot inward toward the frame 3. The elastic component 13 is configured to provide a damping force for the outward splaying of the temple 2 relative to the frame 3, such that the temple 2 can relieve pressure on nose pads of the glasses 100 and the glasses 100 worn on a human body do not easily fall off, thereby improving wearing comfort.

In some embodiments of the present disclosure, the second component 12 may include two limiting portions 121 disposed on an inner side and an outer side. Optionally, when the temple 2 is splayed outward, the second extension portion 114 may be used to compress the elastic component 13, so that the elastic component 13 provides an opposite restoring force. This can be achieved by disposing the elastic component 13 between the second extension portion 114 and the inner-side limiting portion 121. Alternatively, when the temple 2 is splayed outward, the second extension portion 114 may be used to stretch the elastic component 13, so that the elastic component 13 provides an opposite restoring force. This can be achieved by disposing the elastic component 13 between the second extension portion 114 and the outer-side limiting portion 121. In some embodiments of the present disclosure, the elastic component 13 is located between the second extension portion 114 and any of the limiting portions 121 of the second component 12, such that when the first extension portion 111 rotates away from the second component 12, the second extension portion 114 acts on the elastic component 13, causing the elastic component 13 to deform. For example, the second extension portion 114 can compress or stretch the elastic component 13, causing the elastic component 13 to deform or increasing a deformation amount of the elastic component 13. Thus, a restoring force for the first extension portion 111 to rotate toward the second component 12 is provided by means of the elastic component 13.

It may be understood that the "inner-side limiting portion 121" mentioned above may be understood as a limiting portion 121 closer to the face when the glasses 100 are being worn. The "outer-side limiting portion 121" may be understood as a limiting portion 121 farther from the face when the glasses100 are being worn.

In some embodiments of the present disclosure, the second component 12 includes two connecting arms 122. The two connecting arms 122 and the limiting portions 121 define an accommodating space. The second extension portion 114 is accommodated within the accommodating space.

In an optional implementation, each connecting arm 122 is connected to the two limiting portions 121. Optionally, the planes of the connecting arms 122 are substantially perpendicular to the limiting portions 121. The two connecting arms 122 may be used to limit the position of the second extension portion 114. A distance between the two connecting arms 122 is slightly greater than the width of the second extension portion 114, thereby cooperating with the two limiting portions 121 to ensure that the second extension portion 114 can swing only within the accommodating space.

In some embodiments of the present disclosure, the first component 11 further includes a first rotational connecting portion 113. The first rotational connecting portion 113 is connected to at least one of the two connecting arms 122. The connecting arm 122 further provides a physical structure for mounting the first rotational connecting portion 113, facilitating the connection between the second component 12 and the first component 11.

In some optional embodiments, as shown in Fig. 4, the first rotational connecting portion 113 may include a connecting shaft 1132. The connecting shaft 1132 is configured to connect the first component 11 to the second component 12 so that the temple 2 can rotate relative to the frame 3 about the connecting shaft. An axial direction of the connecting shaft 1132 is the first axial direction. Optionally, the connecting shaft 1132 and the first component 11 may be detachable separate components; or the connecting shaft 1132 and the first component 11 may be integrally formed.

In some optional embodiments, as shown in Figs. 5 and 6, the first rotational connecting portion 113 may include a connecting post 1131. The connecting post 1131 is disposed at an included angle between the first extension portion 111 and the second extension portion 114. The connecting post 1131 has a post hole 1131a. The connecting shaft 1132 may be fixed or rotatably connected to the post hole 1131a. The connecting arms 122 of the second component 12 may be provided with first connecting holes 1221. The connecting shaft 1132 is inserted into the post hole 1131a and the first connecting holes 1221. Thus, the second component 12 can be rotatably connected to the connecting shaft.

Optionally, the connecting shaft 1132 may include a columnar body and a cap disposed at one end of the columnar body. An end of the columnar body away from the cap passes sequentially through a first connecting hole 1221 in an upper-side connecting arm 122 and the post hole 1131a in the connecting post 1131, and is then connected to a first connecting hole 1221 in a lower-side connecting arm 122. At least one of the first connecting holes 1221 and the post hole 1131a may be provided with internal threads. The connecting shaft 1132 may be provided with external threads. The post body may be threadedly connected to at least one of the first connecting holes 1221 and the post hole 1131a. The cap is limited by the upper-side connecting arm 122. By disposing the connecting post 1131 at the included angle between the first extension portion 111 and the second extension portion 114, less space between the first extension portion 111 and the second extension portion 114 is occupied, without affecting the connection between the first extension portion 111 and the temple 2, nor the engagement between the second extension portion 114 and the second component 12.

In some embodiments of the present disclosure, the first component 11 may include a mounting plate connected to the first extension portion 111 and the second extension portion 114. The mounting plate extends from the first extension portion 111 toward the second extension portion 114. The connecting post 1131 may be disposed on the mounting plate. The post hole 1131a runs through both the connecting post 1131 and the mounting plate, allowing the connecting shaft of the first rotational connecting portion 113 to pass through the connecting post 1131 and the mounting plate. Optionally, the plane of the mounting plate is substantially perpendicular to at least one of the plane of the first extension portion 111 and the plane of the second extension portion 114, and the mounting plate is connected to ends of the first extension portion 111 and the second extension portion 114 on the same side.

In some embodiments of the present disclosure, the elastic component 13 located between the first component 11 and the second component 12 may include a bent elastic piece. A bent portion of the elastic piece is sleeved on the connecting post 1131. Exemplarily, the bent elastic piece may be generally U-shaped, with a convex arc piece and two straight pieces located on both sides of the convex arc piece. The connecting post 1131 may be located in a recessed groove of the convex arc piece. The two straight pieces respectively abut against a limiting portion 121 and the second extension portion 114.

In some embodiments of the present disclosure, the elastic component 13 located between the first component 11 and the second component 12 may include a torsion spring. Figs. 4, 5 and 6 show schematic structural views of a hinge assembly 1 or glasses with a torsion spring according to some embodiments of the present disclosure. The elastic component 13 may include a torsion spring. The torsion spring is sleeved on the connecting post 1131. The torsion spring has a helical tubular segment and torsion arms located at both ends of the helical tubular segment. The helical tubular segment is sleeved on the connecting post 1131, and the two torsion arms are located within the accommodating space and respectively abut against the second extension portion 114 and a limiting portion 121.

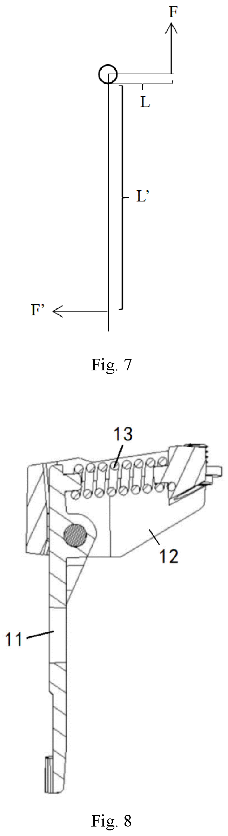

In a model of the first hinge assembly 1, an included angle is formed between a moment arm of the temple 2 and a moment arm of the elastic component 13. As shown in Fig. 7, a schematic diagram of forces acting on a first type of hinge assembly 1 with a torsion spring is provided. The clamping force provided by the temple 2 is F', and a moment arm of the clamping force F' is L'. An elastic force of the torsion spring is a damping force F provided by the torsion spring that resists rotation of the second component relative to the first component, and a moment arm of the damping force F is L.

It may be understood that in some cases, the damping force provided by the torsion spring may not be perpendicular to the moment arm. The damping force may be divided into a damping force perpendicular to the moment arm, and a damping force along the direction of the moment arm. The damping force F perpendicular to the moment arm is an effective damping force capable of resisting the rotation of the second component relative to the first component. The damping force resisting the rotation of the second component relative to the first component mentioned in the present disclosure in each case is an effective damping force.

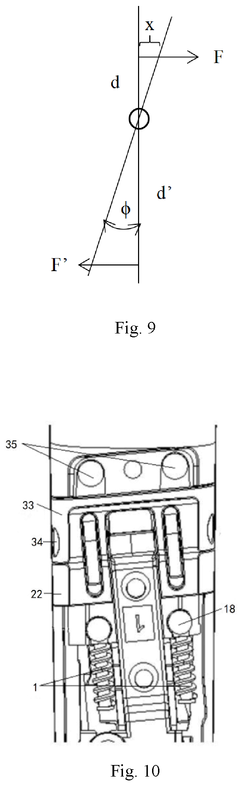

Fig. 8 shows the structure of a second type of hinge assembly 1 according to some embodiments of the present disclosure. Fig. 9 shows a schematic diagram of forces acting on a second type of hinge assembly according to embodiments of the present disclosure. The second type of hinge assembly 1 includes a first component 11 and a second component 12. The first component 11 is connected to the temple 2, and the second component 12 is connected to the frame 3. The first component 11 may be regarded as a part of the temple 2; and the second component 12 may be regarded as a part of the frame 3. Optionally, the second component 12 may be disposed at an end of the frame 3; or the second component 12 may be an endpiece disposed at an end of the frame 3. The first component 11 and the second component 12 are hingedly connected to each other. The first component 11 and the second component 12 are each provided with a compression spring positioning post. The elastic component 13 may be a compression spring. Two ends of the compression spring are respectively sleeved on the compression spring positioning posts on the first component 11 and the second component 12. The clamping force provided by the temple 2 is F', and a moment arm of the clamping force F' is d'. An elastic force of the compression spring is a damping force F provided by the torsion spring that resists rotation of the second component relative to the first component, and a moment arm of the damping force F is d. As shown in Fig. 9, the moment arm d of the elastic component 13 is located on an extension line of the moment arm d' of the temple 2; and the moment arm d of the elastic component 13 is located on the frame. The moment arm d' of the temple 2 and the moment arm d of the frame 3 are respectively located on two sides of a rotation center of the temple 2.

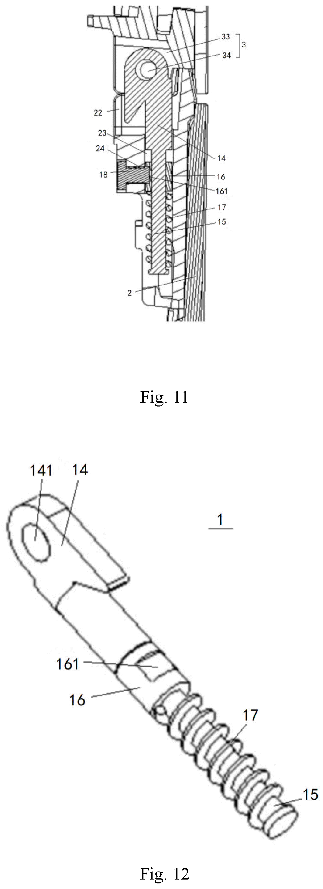

Fig. 10 shows a schematic partial structural diagram of glasses with a third type of hinge assembly according to embodiments of the present disclosure. Fig. 11 shows a partial cross-sectional view of glasses with a third type of hinge assembly according to embodiments of the present disclosure. Fig. 12 shows a schematic structural view of a third type of hinge assembly according to embodiments of the present disclosure. In a possible implementation, the frame 3 has a frame shell and first connecting bases 33 connected to the frame shell. The temple 2 has a temple shell and second connecting bases 22 connected to the temple shell. The first connecting bases 33 are connected to the second connecting bases 22 by means of hinges.

The frame 3 is connected to each temple 2 by means of two hinges. The temple 2 is provided with two second connecting bases 22 in a width direction thereof. The frame 3 is provided with two first connecting bases 33 at an end thereof. A hinge assembly 1 is connected between each first connecting base 33 and each second connecting base 22. The hinge assembly 1 includes a first rod body 14, a second rod body 15 and an elastic component. The elastic component may be a tension spring 17. The second rod body 15 is connected to the first rod body 14. The first rod body 14 is provided with a pivot hole 141. A sliding ring 16 and the tension spring 17 are sleeved on the second rod body 15. An end of the second rod body 15 facing away from the first rod body 14 is provided with a blocking plate. The tension spring 17 is located between the sliding ring 16 and the blocking plate. The sliding ring 16 is provided with a limiting recess 161. The second connecting base 22 has a through hole 23 and a threaded hole 24 in communication with the through hole 23. The second rod body 15 of the hinge is inserted into the through hole 23. A limiting screw 18 passes through the threaded hole 24 of the second connecting base 22 and abuts against the limiting recess 161 of the sliding ring 16 to limit the position of the sliding ring 16. The first connecting base 33 may be fixed to a main body of the frame 3 by means of pivot seat screws 35, and the pivot screw 34 passes through the first connecting base 33 and extends through the pivot hole 141 of the first rod body 14, thus achieving assembly of the hinge assembly. During a process of folding or unfolding the temple 2, a relative position between ends of the temple 2 and the frame 3 changes. A sliding sleeve may slide on the second rod 15 to meet the above-mentioned position change relationship. The arrangement of the tension spring 17 on the hinge ensures that when the temple 2 is unfolded or folded, the relative position between the temple 2 and the frame 3 is relatively stable. When the temple 2 is splayed, the tension spring 17 of the hinge assembly 1 undergoes elastic deformation and applies a force to the temple 2, causing the temple 2 to generate a clamping force.

The clamping force provided by the temple 2 is F', and a moment arm of the clamping force F' is d'. An elastic force of the tension spring 17 is a damping force F provided by the tension spring that resists rotation of the second component relative to the first component, and a moment arm of the damping force F is d. As shown in Fig. 9, the moment arm d of the elastic component 13 of the structure of the third type of hinge assembly 1 is collinear with the moment arm d' of the temple 2, and the moment arm d of the elastic component 13 is located on the temple 2. The moment arm of the temple 2 and the moment arm of the elastic component 13 are located on the same side of the rotation center and on the same straight line.

It should be noted that the moment arm of the elastic component 13 mentioned above in each case is an equivalent moment arm.

A parameter table corresponding to a torsion spring solution for the elastic component 13 in some embodiments of the present disclosure is exemplarily provided below.

| | First position | Second position |
|---|---|---|
| Angle of temple 2 | φ₁=85° (±2°) | φ₂=105° (±2°) |
| Clamping force of temple 2 | F₁'=0.25 (±0.02) kgf | F₂'=0.3 (±0.02) kgf |
| Torque | T₁=2.0 (±0.2) kgf·cm | T₂=2.5 (±0.2) kgf·cm |
| Torsion angle of torsion spring | Θ₁=66.7° ~ 92.6° | Θ₂= Θ₁+20° |
| Torsional force of torsion spring | F₁=T₁/L | F₂=T₂/L |

In some embodiments of the present disclosure, at the clamping part of the temple 2 that is 8 cm (±0.5) away from a pivot axis, the clamping force (F') is set to vary in the range of 0.25 (±0.02) kgf (corresponding to 85° for the temple) to 0.3 (±0.02) kgf (corresponding to 105° for the temple), which corresponds to a torque range of 1.72 kgf.cm to 2.72 kgf·cm, and the range of the torsion spring torque T is selected to be 2.0 (±0.2) kgf·cm to 2.5 (±0.2 ) kgf·cm.

Calculation formulas related to the torsion spring are as follows.

Elastic force: $F \left(kgf\right) = \frac{E ∗ {d}^{∧} 4 ∗ θ}{1167 ∗ π ∗ n ∗ D ∗ L} = k ∗ θ$.

Torque: T (kgf·cm)=F*L,
wherein k is an elastic coefficient, and $k = \frac{F 2 - F 1}{θ 2 - θ 1} = \frac{T 2 - T 1}{Δ θ - L} = \frac{0.025}{L} \left(kgf/cm degree\right)$.

Torsion arm length: depending on structural space, the torsion arm length L is optionally 0.5cm to 0.7cm, for example, optionally 0.6cm. The value of k is in the range of 0.036 kgf/degree to 0.05 kgf/degree.

Θ - torsion angle: according to the formula F=T₁/L=k*Θ, F₁=2.0/0.6=k*Θ₁, and the value of the torsion angle Θ₁ of the first position is in the range of 66.7° to 92.6°. In the case where the elastic component 13 is a torsion spring, when the temple 2 is in the first position, the torsion spring has a first torsion angle compared with a natural state. The value of the first torsion angle is in the range of 66.7° to 92.6°. Therefore, when the temple 2 leaves the first position, the damping force of the torsion spring can be immediately converted into the clamping force of the clamping part of the temple 2, such that a user with a small head circumference can also feel a sufficient clamping force, thereby reducing the compression of the bridge of the user's nose by the glasses.

In some optional embodiments of the present disclosure, as shown in Fig. 5, two torsion arms of the torsion spring respectively abut against the second extension portion 114 and the limiting portion 121. When the second extension portion 114 abuts against the outer-side limiting portion 121 (i.e., when the temple is in the first position), the torsion spring has a first torsion angle in the range of 66.7° to 92.6°.

When the temple 2 is in the first position, the elastic component 13 applies to the temple 2 a first damping force that resists rotation of the temple. When the temple 2 reaches the second position, the elastic component 13 applies to the temple 2 a second damping force that returns the temple to the first position. The elastic component 13 includes a torsion spring. A ratio of the first clamping force to the first damping force is greater than 10 and less than or equal to 17.

In some optional embodiments of the present disclosure, as shown in Fig. 5, when the temple 2 is in the first position, the second extension portion 114 abuts against the outer-side limiting portion 121. At this point, the temple 2 is in a natural state, and the clamping force provided is zero. When the temple 2 leaves the first position due to an external force, the second extension portion 114 leaves the outer-side limiting portion 121, and the torsion spring immediately applies to the temple 2 a first damping force that resists rotation of the temple, such that the temple 2 provides a first clamping force at the clamping part thereof. When the temple 2 reaches the second position, the second extension portion 114 abuts against the inner-side limiting portion 121, the torsion spring applies to the temple 2 a second damping force that returns the temple to the first position. A ratio of the first clamping force to the first damping force is greater than 10 and less than or equal to 17.

In the case where the elastic component 13 is a torsion spring, when the temple 2 is in the first position, a first included angle is formed between the frame and the temple 2. When the temple 2 is in the second position, a second included angle is formed between the frame and the temple 2. An elastic coefficient of the torsion spring is a ratio of a difference between the second damping force and the first damping force to a difference between the second included angle and the first included angle. The value of the elastic coefficient is greater than or equal to 0.036 kgf/degree and less than or equal to 0.05 kgf/degree.

In the case where the elastic component 13 is a torsion spring, a wire diameter of the torsion spring is greater than or equal to 0.8 and less than or equal to 1.0 mm. In embodiments of the present disclosure, the wire diameter of the torsion spring may be selected to be 0.85 mm. The number of active turns of the torsion spring is greater than or equal to 2 and less than or equal to 4. In embodiments of the present disclosure, the number of active turns may be selected to be 3. A mean diameter of the torsion spring is greater than or equal to 2mm. Due to limitations of the torsion spring forming process, an inner diameter of a torsion spring with a wire diameter of 0.85mm or more should be greater than 2mm. An inner diameter of 2.5mm, i.e., a mean diameter is 3.35mm, is selected in embodiments of the present disclosure. The torsion spring is made of stainless steel, and a shear modulus thereof may be 19400.

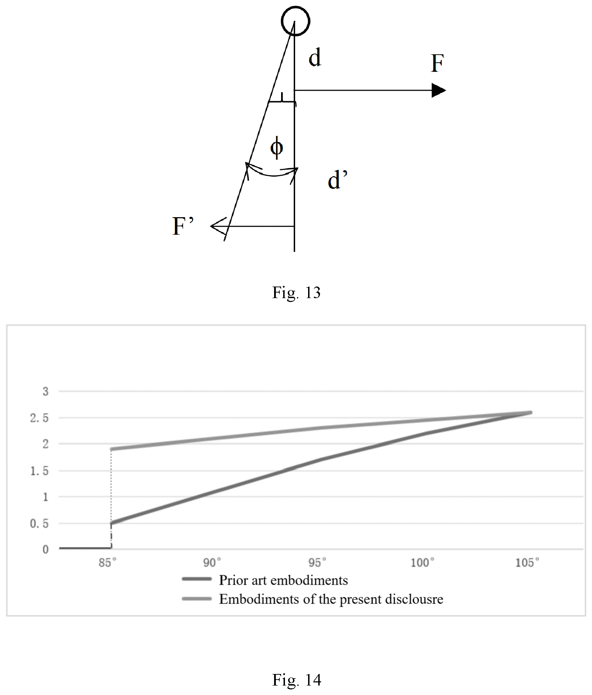

Fig. 14 shows a curve graph illustrating a relationship between a temple clamping force and an outward splaying angle in embodiments of the present disclosure using the above-described torsion spring as the elastic component 13 and in prior art embodiments as obtained through simulation, wherein a vertical axis represents the temple clamping force, and a horizontal axis represents the included angle between the temple and the frame. As shown in Fig. 14, when the included angle between the temple and the frame is 85°, the temple is in a natural state (i.e., the first position, where the clamping force is zero), and when the included angle between the temple and the frame is 105°, the temple has a maximum rotation angle relative to the frame (i.e., the second position, where the clamping force is maximum). The elastic component 13 in the prior art embodiments is three compression springs, with a wire diameter of 0.5mm, a length of 7mm, and an outer diameter of 2mm. It can be seen from the above curve that a difference between an initial clamping force and a final clamping force in the embodiments of the present disclosure is small, while a difference between an initial clamping force and a final clamping force of an existing ordinary hinge is large.

By selecting a suitable torsion spring, a damping force of the torsion spring can be converted into the clamping force of the temple in a limited space, reducing the compression of the bridge of the nose by the temple, and preventing the clamping force of the two temples from significantly increasing within a sufficient clamping space, such that users with different head circumferences can have a comfortable experience.

An elastic coefficient of the torsion spring may be calculated according to the following torsion spring parameter formula: $K = \frac{E ∗ {d}^{∧} 4}{1167 ∗ π ∗ n ∗ D ∗ L}$. The obtained value of k is 0.046 kgf/degree, which meets the above requirement.

Herein, Θ represents a torsion angle. According to the formulas F=T/L=k* Θ, F1=2.0/0.6=0.046* Θ, and a first torsion angle may be obtained as 73° (i.e., Θ1=73°), which corresponds to an included angle of 85° between the temple 2 and the horizontal. A second torsion angle of the torsion spring after outward splaying of 20° is 93° (i.e., Θ2=93°), which corresponds to an included angle of 105° between the temple 2 and the horizontal. F2=k*Θ₂=4.28 kgf, and T2=F2*L=4.28*0.6=2.57 kgf·cm, which meets 2.5 (±0.2) kgf·cm. F1'=T1/d'=2.0/8=0.25 kgf, and F2'=T2/d'=2.57/8=0.32 kgf, which meets the clamping force standard of 0.25 (±0.02) kgf to 0.3 (±0.02) kgf.

Referring to Fig. 5, a schematic structural view of a hinge assembly 1 according to some embodiments of the present disclosure is provided. The hinge assembly 1 is configured to hingely connect the frame to a temple 2 of the glasses 100. The hinge assembly 1 includes a first component 11, a second component 12 and an elastic component 13. The first component 11 is connected to the frame, or the first component 11 is a part of the frame. The second component 12 is connected to the temple 2, or the second component 12 is a part of the temple 2. The first component 11 is rotatably connected to the second component 12, the second component 12 has a first position and a second position relative to the first component 11, and the second component 12 is capable of rotating between the first position and the second position relative to the first component 11. The elastic component 13 is disposed between the first component 11 and the second component 12 to provide a first moment for retaining the second component 12 in the first position and a second moment for rotating the second component from the second position toward the first position; wherein a ratio of the second moment to the first moment is greater than 1 and less than or equal to 1.3.

In some embodiments of the present disclosure, the first position may be a position where the second component 12 is in a naturally splayed state. The second position may be a position where the second component 12 is at a maximum splaying angle.

In some embodiments of the present disclosure, the first position may be a position where the elastic component 13 provides a minimum rotation moment, and the second position may be a position where the elastic component 13 provides a maximum rotation moment.

In some embodiments of the present disclosure, when the second component 12 is in the first position, a first included angle is formed between the first component 11 and the second component 12; when the second component 12 is in the second position, a second included angle is formed between the first component 11 and the second component 12; and a difference between the first included angle and the second included angle is 15° to 25°.

During splaying of the second component 12 from 15 degrees to 25 degrees, the clamping force exerted by the temple 2 on the user's head does not increase significantly, and the clamping force felt by the user does not change significantly either, such that users with different head circumferences all have a comfortable wearing experience. In embodiments of the present disclosure, when the second component 12 splays from 15 degrees to 25 degrees, a clamping space between the two temples 2 varies over a relatively large range, which can meet wearing requirements of most users, such that most users can have a good wearing experience.

In some embodiments of the present disclosure, the first moment is greater than or equal to 1.7 kgf·cm and less than or equal to 2.3 gf·cm. This can effectively reduce the compression of the bridge of the user's nose by the glasses, conforming to ergonomic design, while preventing the glasses from sliding down or falling off, resulting in a good wearing experience for the user.

In some embodiments of the present disclosure, the elastic component 13 includes a torsion spring. When the second component 2 is in the first position, the torsion spring has a first torsion angle compared with a natural state. The first torsion angle is greater than or equal to 66.7 degrees and less than or equal to 92.6 degrees. Therefore, when the second component 2 leaves the first position, the damping force of the torsion spring can be immediately converted into the clamping force of the clamping part of the temple 2, such that a user with a small head circumference can also feel a sufficient clamping force, thereby reducing the compression of the bridge of the user's nose by the glasses.

In some embodiments of the present disclosure, the elastic component 13 includes a torsion spring. An elastic coefficient of the torsion spring is a ratio of a difference between the second damping force and the first damping force to a difference between the second included angle and the first included angle. The value of the elastic coefficient is greater than or equal to 0.036 kgf/degree and less than or equal to 0.05 kgf/degree.

In some embodiments of the present disclosure, the elastic component 13 is a torsion spring. A wire diameter of the torsion spring is greater than or equal to 0.8 and less than or equal to 1.0 mm, the number of active turns of the torsion spring is greater than or equal to 2 and less than or equal to 4, and a mean diameter of the torsion spring is greater than or equal to 2 mm. The torsion spring is made of stainless steel.

By selecting a suitable torsion spring, a damping force of the torsion spring can be converted into the clamping force of the temple in a limited space, reducing the compression of the bridge of the nose by the temple, and preventing the clamping force of the two temples from significantly increasing within a sufficient clamping space, such that users with different head circumferences can have a comfortable experience.

The above description has been made for purposes of illustration and description. In addition, this description is not intended to limit the embodiments of the present disclosure to the forms disclosed herein. Although a plurality of example aspects and embodiments have been discussed above, certain variations, modifications, changes, additions, and sub-combinations thereof would occur to those skilled in the art.

## Claims

1. A hinge assembly configured to hingely connect a frame to a temple of glasses, wherein the hinge assembly comprises:
a first component and a second component, wherein
the first component is arranged in one of the following manners:
the first component is connected to the frame; and
the first component is a part of the frame;
the second component is arranged in one of the following manners:
the second component is connected to the temple; and
the second component is a part of the temple;
wherein the first component is rotatably connected to the second component, the second component has a first position and a second position relative to the first component, and the second component is capable of rotating between the first position and the second position relative to the first component; and
an elastic component disposed between the first component and the second component to provide a first moment for retaining the second component in the first position and a second moment for rotating the second component from the second position toward the first position, wherein a ratio of the second moment to the first moment is greater than 1 and less than or equal to 1.3.

2. The hinge assembly according to claim 1, wherein when the second component is in the first position, a first included angle is formed between the second component and the first component; when the second component is in the second position, a second included angle is formed between the second component and the first component; and a difference between the first included angle and the second included angle is greater than or equal to 15° and less than or equal to 25°.

3. The hinge assembly according to claim 1 or 2, wherein the first moment is greater than or equal to 1.7 kgf·cm and less than or equal to 2.3 kgf·cm.

4. The hinge assembly according to any one of claims 1 to 3, wherein the elastic component comprises at least one of a torsion spring, an elastic piece, a tension spring, a compression spring and a damping shaft.

5. The hinge assembly according to any one of claims 1 to 3, wherein the elastic component comprises a torsion spring, and a torsion arm length of the torsion spring is greater than or equal to 0.5 cm and less than or equal to 0.7 cm.

6. The hinge assembly according to any one of claims 1 to 3, wherein the elastic component comprises a torsion spring; when the second component is in the first position, the torsion spring has a first torsion angle compared with a natural state; and the first torsion angle is greater than or equal to 66.7 degrees and less than or equal to 92.6 degrees.

7. The hinge assembly according to any one of claims 1 to 3, wherein the elastic component comprises a torsion spring; and an elastic coefficient of the torsion spring is greater than or equal to 0.036 kgf/degree and less than or equal to 0.05 kgf/degree.

8. The hinge assembly according to any one of claims 1 to 3, wherein the elastic component is a torsion spring; a wire diameter of the torsion spring is greater than or equal to 0.8 and less than or equal to 1.0 mm, the number of active turns of the torsion spring is greater than or equal to 2 and less than or equal to 4, and a mean diameter of the torsion spring is greater than or equal to 2 mm; and the torsion spring is made of stainless steel.

9. Glasses, comprising:
a frame configured to support optical components;
temples connected to the frame; and
hinge assemblies according to claims 1-8, wherein each hinge assembly is configured to hingely connect the frame to a corresponding temple of the glasses, enabling the temple to rotate between the first position and the second position relative to the frame.

10. The glasses according to claim 9, wherein each temple comprises a clamping part; when the temple leaves the first position, a first clamping force is applied to the clamping part; when the temple reaches the second position, a second clamping force is applied to the clamping part; and a ratio of the second clamping force to the first clamping force is greater than 1 and less than or equal to 1.3.

11. The glasses according to any one of claims 10, wherein a distance between the clamping part and a connection between the temple and the frame is 7.5cm to 8.5cm.

12. The glasses according to any one of claims 10 to 11, wherein the first clamping force is greater than or equal to 0.23 kgf and less than or equal to 0.27 kgf.

13. The glasses according to any one of claims 9 to 12, wherein when the temple is in the first position, an included angle between the temple and the frame is greater than or equal to 83 degrees and less than or equal to 87 degrees.

14. The glasses according to any one of claims 9 to 13, wherein the elastic component has a moment arm, and the moment arm of the elastic component is arranged in any one of the following manners:
the moment arm of the elastic component and a moment arm of the temple form an included angle therebetween;
the moment arm of the elastic component is located on an extension line of the moment arm of the temple, and the moment arm of the elastic component is located on the frame; and
the moment arm of the elastic component is collinear with the moment arm of the temple, and the moment arm of the elastic component is located on the temple.

15. The glasses according to any one of claims 9 to 14, wherein when the temple leaves the first position, the elastic component applies a first damping force to the temple that resists rotation of the temple; the elastic component comprises a torsion spring; and a ratio of the first clamping force to the first damping force is greater than 10 and less than or equal to 17.
